(19) Europäisches Patentamt

European Patent Office

Office européen des brevets

(11) **EP 1 101 315 B1**

(12) **FASCICULE DE BREVET EUROPEEN**

(45) Date de publication et mention
de la délivrance du brevet:
**16.03.2005 Bulletin 2005/11**

(21) Numéro de dépôt: **99932964.2**

(22) Date de dépôt: **23.07.1999**

(51) Int Cl.$^7$: **H04L 7/02**

(86) Numéro de dépôt international:
**PCT/FR1999/001819**

(87) Numéro de publication internationale:
**WO 2000/005849 (03.02.2000 Gazette 2000/05)**

(54) **DETERMINATION DE LA PHASE D'ECHANTILLONAGE**

ERFASSUNG DER ABTASTPHASE

METHOD FOR DETERMINING THE SAMPLING PHASE AND METHOD FOR SYNCHRONISATION
WORD DETECTION USING THE PHASE DETECTION METHOD

(84) Etats contractants désignés:
**AT BE CH CY DE DK ES FI FR GB GR IE IT LI LU
MC NL PT SE**

(30) Priorité: **24.07.1998 FR 9809428**

(43) Date de publication de la demande:
**23.05.2001 Bulletin 2001/21**

(73) Titulaire: **THOMSON multimedia
92100 Boulogne Billancourt (FR)**

(72) Inventeurs:
• **ROSSET, Fabienne
F-92648 Boulogne Cedex (FR)**
• **CHEVRETTE, Joel, c/o Thomson Multimedia
F-92648 Boulogne Cedex (FR)**

(74) Mandataire: **Kohrs, Martin
Thomson multimedia
46, quai A. Le Gallo
92648 Boulogne-Billancourt Cedex (FR)**

(56) Documents cités:
**EP-A- 0 380 876          EP-A- 0 821 503
US-A- 5 809 086          US-A- 5 892 474**

• **COWLEY, SABEL: "The performance of two
symbol timing recovery algorithms for PSK
demodulators" IEEE TRANSACTIONS ON
COMMUNICATIONS, vol. 42, no. 6, juin 1994
(1994-06), pages 2345-2355, XP000456242 NEW
YORK, US ISSN: 0090-6778**

**Description**

L'invention a pour objet un procédé de détermination de la phase d'échantillonnage pour signaux à modulation numérique de type n-PSK et un procédé de détection de mot de synchronisation mettant en oeuvre le procédé de détection de phase. L'invention s'applique notamment dans le cadre d'un décodeur numérique conforme à la spécification DVB avec canal retour.

Pour démoduler un signal modulé à l'aide d'une modulation de type $2^n$-PSK (à enveloppe constante) et ainsi retrouver les symboles émis, il est nécessaire d'échantillonner le signal à la fréquence symbole avec une phase correcte. L'algorithme de Gardner permet de déterminer l'instant d'échantillonnage approprié. Cet algorithme présente cependant l'inconvénient de nécessiter un certain temps de convergence, temps pendant lequel les symboles reçus sont perdus.

Lorsque le signal transmis comporte des salves (en anglais: 'bursts'), ce temps de convergence peut être préjudiciable au bon fonctionnement du récepteur. En effet, une salve courte peut être de durée insuffisante pour obtenir la synchronisation. Par ailleurs, si les salves sont envoyées par des émetteurs différents, il n'est pas possible de conserver la synchronisation d'une salve à l'autre.

Un document intitulé « The performance of two symbol timing recovery Algorithms for PSK demodulators » (" Les performances d'un algorithme de détermination d'un délai à deux symboles" en français) écrit par Cowley and Sabel et publié dans IEEE Transactions on Communications en Juin 1994 divulgue une technique basée sur une analyse statistique d'un algorithme d'un recouvrement de délai orienté symbole pour des modems PSK. La demande de brevet européen EP0380876 déposée au nom de KK Toshiba présente un décodeur à maximum de vraisemblance où une phase est déterminée. Une autre demande de brevet européen EP0821503 décrit aussi une méthode de recouvrement de délai et des circuits correspondants. Toutes ces méthodes ont également l'inconvénient de requérir des temps longs de convergence, en particulier lorsque le signal transmis comprend des salves.

Le but de l'invention est par conséquent de proposer une méthode de détection de préambules de synchronisation avec une détermination des instants d'échantillonnage convergeant rapidement.

L'invention a pour objet un procédé de détermination de la phase d'échantillonnage d'un signal modulé par modulation numérique caractérisé en ce qu'il comprend les étapes:

de suréchantillonnage de facteur m des coordonnées de L symboles consécutifs,
de conversion des coordonnées suréchantillonnées des L symboles en valeurs angulaires,
de repli des valeurs angulaires sur un point de la constellation de la modulation,
d'estimation du bruit des valeurs angulaires, pour chaque phase de suréchantillonnage, par rapport au dit point,
de sélection de la phase de suréchantillonnage présentant le bruit le plus faible.

Selon un exemple de réalisation particulier de l'invention, le bruit est estimé par calcul de la variance des valeurs angulaires repliées par rapport à la valeur angulaire théorique dudit point.

Selon l'exemple particulier de réalisation, les symboles sont codés en différentiel et l'étape de calcul de la variance est effectuée sur la base de différences d'angles.

Selon l'exemple particulier de réalisation, le choix de la phase de suréchantillonnage optimale est réalisé tous les L symboles.

Selon un autre exemple de réalisation, le procédé comporte en outre l'étape de mémorisation des valeurs de différence d'angle pour la détermination de valeurs de variance sur L symboles pour chaque valeur de différence d'angle ('variance glissante').

L'invention a aussi pour objet un procédé de détection d'un mot de synchronisation faisant suite au procédé de détection de phase optimale et caractérisé en ce qu'il comporte en outre l'étape de détermination de l'écart d'une suite de différences d'angles par rapport à des différences d'angles correspondant au mot de synchronisation prédéterminé, un écart sensiblement nul indiquant la présence dudit mot.

Selon un exemple de réalisation particulier, le procédé comporte en outre les étapes:

de mémorisation de l'ensemble des valeurs de différence d'angles suréchantillonnés, jusqu'à détermination de la phase d'échantillonnage optimale;
de détermination de ladite phase optimale;
de détermination de l'écart uniquement pour les valeurs de différence d'angles correspondant à ladite phase.

Selon un autre exemple de réalisation, le procédé comporte en outre les étapes:

d'accumulation, en continu au fur et à mesure de l'arrivée des valeurs de différence d'angle, de l'écart partiel pour chaque phase d'échantillonnage distincte;

de détermination de la phase optimale;
d'analyse des écarts accumulés pour la phase optimale en vue de la détection du mot de synchronisation.

D'autres caractéristiques et avantages de l'invention apparaîtront à travers la description d'un exemple de réalisation particulier non limitatif, illustré par les figures jointes parmi lesquelles:

- la figure 1 est un diagramme de la constellation d'une modulation QPSK,
- la figure 2 est un diagramme bloc d'un récepteur mettant en oeuvre le procédé selon l'invention,
- la figure 3 est un diagramme de la constellation de la figure 1 après repli des points de la constellation sur un seul point,
- la figure 4 est un schéma d'une mémoire de type premier entré premier sorti utilisée dans le cadre de la détermination de la phase d'échantillonnage dans la seconde partie de la description,
- la figure 5 est un diagramme temporel indiquant par rapport aux symboles dans le signal reçu les instants de détermination de la phase d'échantillonnage et des évaluations du mot de synchronisation à détecter,
- la figure 6 est un schéma d'une partie de mémoire de type premier entré premier sorti utilisée dans la détection du mot de synchronisation,
- la figure 7 est un diagramme de la constellation de la figure 1 après repli des points de la constellation sur un seul point dans le cas d'un décalage en fréquence faible,
- la figure 8 est un diagramme de la constellation de la figure 1 après repli des points de la constellation sur un seul point dans le cas d'un décalage en fréquence fort.

Dans une première partie de la description, on décrira les moyens de détermination de l'instant d'échantillonnage optimal, tandis que dans une seconde partie, on décrira plus particulièrement la détection d'un mot de synchronisation.

### Première partie

#### 1] Généralités

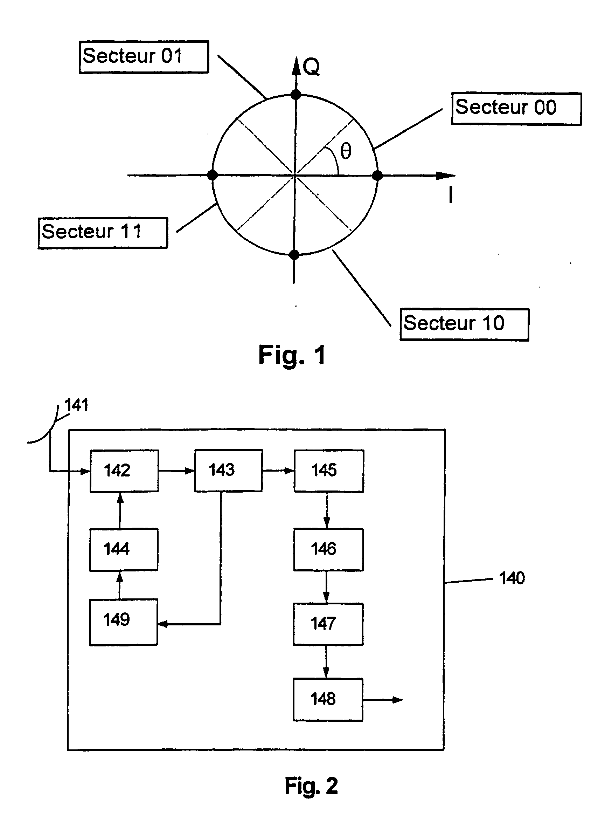

L'exemple de réalisation décrit ci-dessous met en oeuvre des valeurs d'angle correspondant aux échantillons du signal de type $2^n$-PSK, ces valeurs pouvant être déterminées par exemple par l'intermédiaire du procédé et du dispositif de conversion angulaire décrits dans une demande déposée le même jour que la présente demande et revendiquant la même priorité française FR 98 09 428 déposée le 24 juillet 1998 au nom du demandeur. La conversion angulaire détermine, à partir de deux échantillons sur 8 bits chacun du signal reçu et représentant respectivement les coordonnées d'un point dans le plan (I,Q), une valeur d'angle codée sur 6 bits. Un bit supplémentaire indique la validité ou non-validité d'une valeur d'angle particulière. Pour plus de détails, on se référera à la demande citée ci-dessus. De manière générale, le convertisseur angulaire fournit des valeurs d'angle sur N+n bits, où $2^n$ est le nombre de points de la constellation.
A titre d'exemple, la figure 1 est un diagramme d'une constellation d'une modulation QPSK dans le plan (I,Q).

#### 2] Détermination de la phase d'échantillonnage.

La figure 2 est un diagramme bloc de la partie démodulation et correction d'erreur d'un récepteur de télévision numérique apte à effectuer la correction de fréquence de la façon décrite ci-dessus. Ce récepteur 140 comporte un syntoniseur, ou tuner, 142 relié à une antenne parabolique 141 (ou une autre interface avec un support de transmission, par exemple une interface câble) et recevant un signal en provenance d'un synthétiseur de fréquences 144 contrôlé par un microprocesseur 149. Le signal issu du syntoniseur 142 est démodulé par un démodulateur QPSK 143 comportant entre autres un convertisseur analogique-numérique réalisant la numérisation de I et Q, le circuit 143 déterminant également les valeurs d'angle à partir des couples d'échantillons (I,Q). Le signal QPSK démodulé est fourni à un premier correcteur d'erreur 145, suivi d'un désentrelaceur 146, d'un second correcteur d'erreur 147 et d'un démultiplexeur 148.
Le circuit 143 réalise dans un premier temps un échantillonnage du signal en provenance du tuner 142 à la fréquence symbole multipliée par un facteur s. s est choisi pour que le taux d'erreur fixé soit respecté pour un rapport signal à bruit donné. L'erreur d'échantillonnage est de $1/(2s)$. Les échantillons sont convertis en valeurs angulaires de la manière indiquée dans la demande soeur. A titre d'exemple, s peut être pris égal à 6. On désignera dans la suite par 'classe' l'ensemble de valeurs d'angle de même rang sur un ensemble d'échantillons représentant L symboles. Par exemple si s est pris égal à 6 (ce qui est suffisant pour une modulation QPSK), alors chaque sixième valeur en partant de la première appartient à la première classe, chaque sixième valeur en partant de la seconde appartient à la seconde classe etc...

Pour la détermination de la phase d'échantillonnage, une analyse des N bits de poids faible des valeurs angulaires est effectuée. En parallèle, les valeurs de symboles sont déterminées à l'aide des n bits de poids fort.

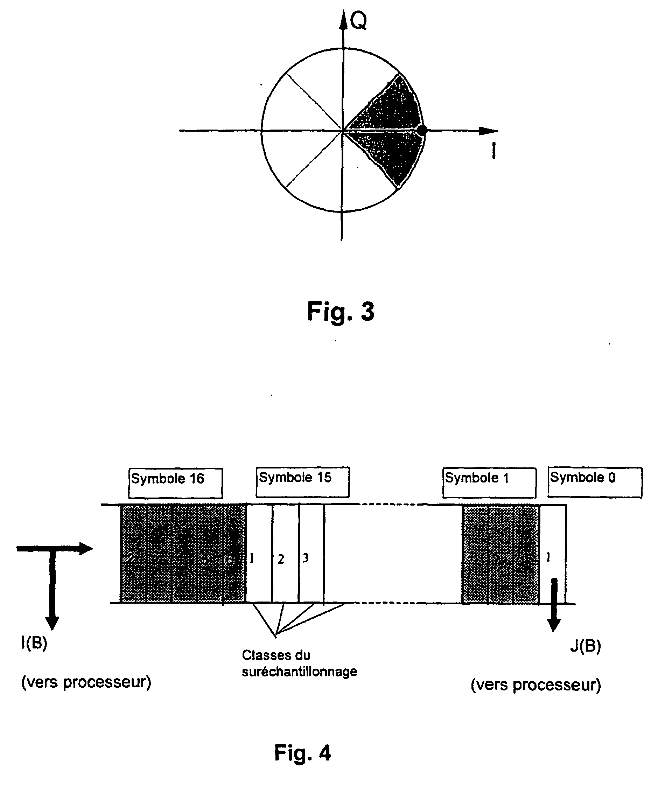

La prise en considération des N bits de poids faible revient à effectuer un repliement de la constellation sur un secteur particulier du plan (I,Q), de manière à superposer tous les points de la constellation. La figure 3 illustre le cas d'une constellation 4-PSK (appelée aussi QPSK), où les quatre quadrants ont été repliés sur un seul quadrant. Selon l'erreur de phase commise lors de l'échantillonnage, les points démodulés formeront un nuage plus ou moins étendu autour de la position idéale. Pour déterminer la phase optimale, on étudie la dispersion de L points d'une même classe. Plus L est choisi élevé, plus la précision de la détermination de la phase sera grande.

La dispersion est évaluée en déterminant la variance de l'angle codé sur N bits. Cette variance est égale à:

$$Variance = \frac{\sum_0^{L-1}(Angle - moy)^2}{L} \quad (1)$$

où L est la longueur d'observation en symboles, 'Angle' est la valeur d'angle sur N bits et où moy est la moyenne des L valeurs d'angles.

Plus la variance est faible, plus les points sont resserrés autour de la moyenne.

Deux cas sont à distinguer pour que qui est de la détermination de la phase d'échantillonnage: le premier cas est celui où la récupération de la porteuse a déjà été faite, la constellation ne tournant pas, le second cas étant celui où la récupération de porteuse n'a pas été faite, la constellation étant en rotation.

2.1] Cas où la récupération de la porteuse a déjà été faite

Dans ce cas, la valeur de la variable 'moy' dans l'équation 1 est nulle. Partant de (1), on se propose de calculer (2) pour évaluer le bruit de dispersion:

$$1/2 \frac{\sum_0^{L/2-1}(\Delta Angle)^2}{L/2} \quad (2)$$

En posant

$$Optimum = \sum_0^{L/2-1}(\Delta Angle)^2 \quad (3),$$

on obtient:

Variance = Optimum/L (4).

On prendra par ailleurs:

$p = \log_2 [L]$
$m = s$
$k = \log_2 [m]$
p, m et k sont arrondis à l'entier supérieur s'il s'agit de nombres réels.

Le dispositif pour la mise en oeuvre de l'algorithme comporte:

- m accumulateurs Accu(i) de 2N+p-2 bits, i variant de 0 à m-1
- 1 compteur A de p bits (comptant de 0 à L-1)
- 1 compteur B de k bits (comptant de 0 à m-1)

- 1 registre 'Phase' de k bits (comptant de 0 à m-1)
- 1 registre 'Optimum' de 2N+p-2 bits
- m accumulateurs de N bits (I(i)), i variant de 0 = m-1

Le compteur A indique l'ordre du symbole auquel se rapporte un angle dans une période d'observation.

Le compteur B indique la classe d'un angle.

Les accumulateurs I(i) servent à contenir soit une valeur d'angle (pour les symboles de rang pair), soit une différence d'angle (pour les symboles de rang impair), et ce pour les m classes dans chaque symbole.

L'accumulateur Accu(i) sert à accumuler les carrés des différences d'angle (I(i)) pour la classe i.

Le registre Optimum comporte une valeur proportionnelle à la variance correspondant à la phase optimale.

Le registre Phase indique la classe d'angle correspondant au contenu du registre Optimum, à savoir la phase d'échantillonnage la plus avantageuse.

L'algorithme 'A' mis en oeuvre est le suivant:

(1) Initialisation de A, B et Accu (0 à m-1) à zéro

(2) Si A pair (i.e. bit de poids faible à zéro) alors I(B) = Angle

sinon  $I(B) = (I(B)-Angle)$ modulo $2^n$

Si A=1 alors  $Accu(B) = [I(B)]^2$

sinon $Accu(B) = Accu(B) + [I(B)]^2$

Fin Si

Fin Si

(3) Si B = m-1   alors   B = 0

Si A = L-1    alors A = 0

sinon A = A+1

Fin Si

Sinon B = B+1

Fin Si

(4) Si A = 0 et [ B = 0 ou Optimum > Accu(B) ] alors

Optimum = Accu (B)

Phase = B

Fin Si

(5) Reprendre l'étape 2 avec l'angle suivant.

Tous les L symboles, c'est dire tous les m*L angles, on dispose de la phase d'échantillonnage recherchée dans le registre Phase. On dispose par ailleurs de la valeur d'Optimum correspondant à cette phase, et qui peut être utilisée pour déterminer le rapport signal sur bruit (SNR):

$$SNR = \frac{(L/2)\times(2^{N-1})^2\times 2^{2n}}{Optimum \times \pi^2} = \frac{L}{2 \times Optimum} \tag{5}$$

où Optimum est exprimé en radians au carré dans l'expression de droite.

Dans le cas où $L=2^p$ , le rapport signal à bruit peut être exprimé par l'approximation suivante:

$$SNR = 3(p+2N-\log_2(\text{Optimum}))-10+6n \tag{6}$$

2.2] Cas où la récupération de la porteuse n'a pas été faite

Dans ce cas, la constellation tourne autour de l'origine à une vitesse correspondant à la différence entre la fréquence de la porteuse du signal et la fréquence du tuner. Soit $\Delta f$ cette différence. L'approximation selon laquelle la moyenne 'moy' est nulle n'est plus valable.

Entre deux angles consécutifs de la même classe, le décalage angulaire sera donc:

$$\Delta\theta = \Delta f \times \frac{2^{N+n}}{2\pi} \times \frac{1}{\textit{fréquence\_ symbole}} \tag{7}$$

Deux cas se présentent, selon l'amplitude de $\Delta f$:

2.2.1] Cas où

$$\frac{\Delta f}{\textit{fréquence\_ symbole}} < \frac{\pi}{2^{n+1}}$$

est vérifiée (soit $\Delta$Angle < $2^{N-2}$)

La différence de fréquence est telle que l'algorithme de détermination de la phase doit être adapté. En effet, on avait supposé précédemment que la moyenne des angles (codés sur n bits, constellation repliée sur un point unique) était nulle. Cette approximation n'est plus valable dans le présent cas. On se propose d'estimer cette moyenne.

L'algorithme 'A' est modifié de la façon suivante:

- On étend le registre Optimum à 2N+2p-2 bits
- On dispose de m registres Moyenne(i) de N-1+p-1 bits, i variant de 0 à m-1. Ces registres comporteront les moyennes des angles pour chacune des m classes.

L'algorithme 'A' devient alors (modifications soulignées):

(1) Initialisation de A, B et Accu (0 à m-1) à zéro

Initialisation de Moyenne (0 à m-1) à zéro

(2) Si A pair (i.e. bit de poids faible à zéro) alors I(B) = Angle

sinon  I(B) = (I(B)-Angle) modulo $2^n$

Si A=1 alors  Accu(B) = $[I(B)]^2$

Moyenne(B) = I(B)

sinon  Accu (B) = Accu (B) + $[I(B)]^2$

Moyenne(B) = Moyenne(B) + I(B)

Fin Si

Fin Si

(3) Si B = m-1   alors   B = 0

Si A = L-1     alors A = 0

sinon A = A+1

Fin Si

Sinon  B = B+1

Fin Si

(4) Si A = 0 et  [ B = 0 ou

Optimum > ½LAccu(B)-(Moyenne(B))² ]

alors

Optimum = ½LAccu(B)-(Moyenne(B))²

Phase = B

Fin Si

(5) Reprendre l'étape 2 avec l'angle suivant.

Le rapport signal à bruit devient alors:

$$SNR = \frac{L^2 \times (2^{N+n-1})^2}{2 \times Optimum \times \pi^2} \qquad (8)$$

Une approximation de cette expression en dB est:

$$SNR = 3(2p+2N-\log_2(Optimum))-16-6+6n \approx 3(\text{nombre de zéros en}$$

$$\text{bits de poids fort de Optimum})-1 +6(n-2) \qquad (9)$$

Selon une variante de réalisation, si $L=2^p$ , il est possible d'éviter l'utilisation d'un registre Optimum étendu, en procédant à un décalage approprié des bits lors du calcul du contenu d'Optimum.

On prendra alors:

$$Optimum = Accu(B)-2^{p-1} [Moyenne(B)[N+p-3,...,p-1]]^2$$

Ceci revient à prendre les N-1 bits de poids fort de la moyenne, de les élever au carré et de décaler le tout de p-1 bits. Du point de vue de la notation, les bits choisis dans un registre sont indiqués entre crochets à la suite du registre concerné.

Le test sur Optimum devient par conséquent:

$$\text{Optimum} > \text{Accu(B)} - 2^{p-1} \, [\text{Moyenne(B)}[N+p-3, ..., p-1]]^2$$

2.2.2] Cas où

$$\frac{\Delta f}{fréquence\_symbole} < \frac{\pi}{2^{n+1}}$$

n'est pas vérifiée

On suppose néanmoins que $\frac{\Delta f}{fréquence\_symbole} < \frac{2\pi}{2^{n+1}}$, à savoir $\Delta\theta < 2^{N-1}$ avec $\Delta\theta$ différence des angles exprimés sur N+n bits. En effet, on veut que $\Delta\theta$ soit inférieur à la moitié de l'angle entre deux points de la constellation.

Par rapport à la section 2.2.1., on prévoit en outre:

- Un registre 'Inversion' à un bit,
- m registres de N-1+p-1 bits Moyenne'(i), i variant de 0 à m-1,
- m registres de 2N+p-2 bits Accu'(i), i variant de 0 à m-1.

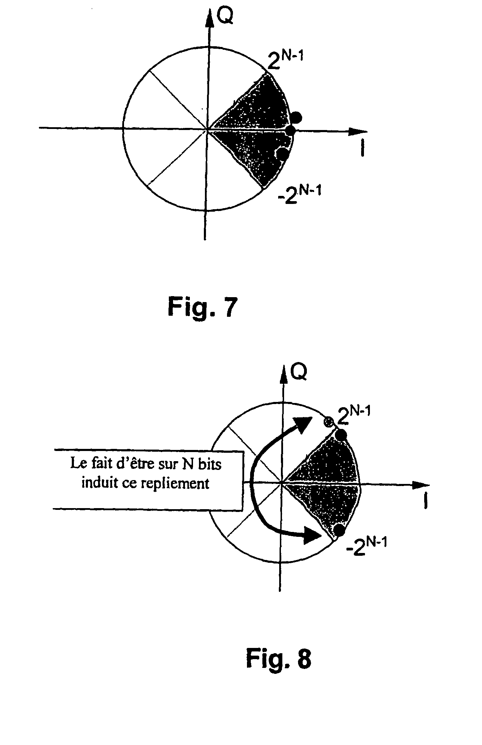

Etant donné la rotation de la constellation, il se peut que les valeurs d'angles (repliés) soient mal placées. En effet, jusqu'à présent, la moyenne était considérée comme proche de 0. Ce qui donnait des points de la constellation répartis comme dans la figure 7. Cela est vrai tant que la moyenne est comprise entre +/- $\Delta\theta < 2^{N-2}$ ce qui revient à limiter la rotation de la constellation comme vu au paragraphe précédent. Si la rotation est supérieure, on se retrouve avec une répartition des différences d'angles conforme à la figure 8. La moyenne risque donc d'être fausse (0 dans le cas de la figure 8 à la place de $2^{N-1}$). En inversant le bit de signe (ou bit de poids fort) cela revient à ajouter $2^{N-1}$ modulo $2^N$ ce qui revient à faire passer la figure 8 à la figure 7 et de s'en souvenir au moment de déduire la rotation de la constellation (pour l'évaluation du delta de fréquence)

On accumule de manière parallèle les moyennes des différences d'angle (Moyenne(i), respectivement Moyenne'(i)) et les carrés des différences d'angle (Accu(i), respectivement Accu'(i)), en inversant le bit de signe de I(B) pour les accumulations de Moyenne'(i) et de Accu'(i). La valeur de Optimum est comparée à la variance dans les deux cas, et la variance la plus faible sera retenue.

On apporte les modifications suivantes à l'algorithme de la section 2.2.1.:

(on suppose ici que l'on met en oeuvre la variante selon laquelle $L=2^p$)

(1) Initialisation de A, B et Accu (0 à m-1) à zéro

Initialisation de Moyenne (0 à m-1) à zéro

Initialisation de Accu' (0 à m-1) à zéro

Initialisation de Moyenne' (0 à m-1) à zéro

(2) Si A pair (i.e. bit de poids faible à zéro) alors I(B) = Angle

sinon  I(B) = (I(B)-Angle) modulo $2^n$

Si A=1 alors  $Accu(B) = [I(B)]^2$

$Accu'(B) = [\overline{I(B)}]^2$

$Moyenne(B) = I(B)$

$Moyenne'(B) = \overline{I(B)}$

sinon  $Accu\ (B) = Accu\ (B) + [I(B)]^2$

$Accu'\ (B) = Accu'\ (B) + [\overline{I(B)}]^2$

$Moyenne(B) = Moyenne(B) + I(B)$

$Moyenne'(B) = Moyenne'(B) + \overline{I(B)}$

Fin Si

Fin Si

$$(3) \text{ Si } B = m\text{-}1 \quad \text{alors} \quad B = 0$$
$$\text{Si } A = L\text{-}1 \quad \text{alors } A = 0$$
$$\text{sinon } A = A+1$$
$$\text{Fin Si}$$
$$\text{Sinon } B = B+1$$
$$\text{Fin Si}$$
$$(4) \text{ Si } A = 0 \text{ et } [B = 0$$
$$\text{ou}$$
$$\text{Optimum} > \text{Accu}(B)\text{-}2^{p\text{-}1} [\text{Moyenne}(B)[N+p\text{-}3,...,p\text{-}1]]^2 ] \text{ alors}$$
$$\text{Optimum} = \text{Accu}(B)\text{-}2^{p\text{-}1} [\text{Moyenne}(B)[N+p\text{-}3,...,p\text{-}1]]^2$$
$$\text{Phase} = B$$
$$\text{Inversion} = 0$$
$$\text{Fin Si}$$
$$\underline{(4') \text{ Si } A = 0 \text{ et Optimum} > \text{Accu'}(B)\text{-}2^{p\text{-}1} [\text{Moyenne'}(B)[N+p\text{-}3,...,p\text{-}1]]^2}$$
$$\underline{\text{alors}}$$
$$\underline{\text{Optimum} = \text{Accu'}(B)\text{-}2^{p\text{-}1} [\text{Moyenne'}(B)[N+p\text{-}3,...,p\text{-}1]]^2}$$
$$\underline{\text{Phase} = B}$$
$$\underline{\text{Inversion} = 1}$$
$$\underline{\text{Fin Si}}$$

$$(5) \text{ Reprendre l'étape 2 avec l'angle suivant.}$$

La valeur du registre Inversion permet de déterminer si la phase optimum trouvée correspond au cas $\Delta\theta < 2^{N\text{-}2}$ (Inversion=0) ou au cas $2^{N\text{-}1} > \Delta\theta \geq^{N\text{-}2}$ (Inversion=1).

Il est bien évidemment également possible de modifier l'algorithme ci-dessus dans le cas où la simplification due à $L = 2^p$ ne s'applique pas.

3] Décodage des symboles

3.1] Décodage des symboles dans le cas où la porteuse a été récupérée (décodage différentiel)

La détermination d'un symbole est effectuée à partir des n+2. bits de poids fort de l'angle correspondant à la phase optimale. Quand les symboles sont codés en différentiel, l'algorithme 'B' ci-dessous est appliqué, parallèlement à l'algorithme 'A'. C'est à dire en utilisant les valeurs des compteurs A et B, du registre Phase et en ne le déclenchant qu'une fois la phase et le début de préambule (c.f. seconde partie) trouvés.

L'algorithme utilise les registres suivants:

-    l'angle entrant noté Angle[n-1 ... -1] qui comprend des n+1 bits de poids fort de l'angle déterminé dans le paragraphe Généralité de cette première partie.
-    Un registre delta(0) de n+1 bits.
-    Un registre delta(1) de n+1 bits.
-    Un registre 'symbole_émis' de n bits.

Du point de vue de la notation, les bits [n-1...0] d'un des registres delta ci-dessus désignent les n bits de poids le plus fort de ce registre, tandis que le bit [-1] désigne le bit de poids le plus faible immédiatement consécutifs aux n bits de poids le plus fort.

L'algorithme 'B' est le suivant:

(1) Initialisation de delta(0) et delta(1) à zéro.
(2) Si B = Phase, alors
    Si A est pair alors
    symbole_émis = conversion [delta(0)[n-1...0]+delta(0)[-1]]
    Sinon
    symbole_émis = conversion [delta(1)[n-1...0]+delta(1)[-1]]
    Fin Si
  Fin Si

(3) Si B = Phase, alors
    Si A est pair alors  delta(0) = Angle
                  delta(1) = delta (0) – Angle
        Sinon delta(0) = delta (0) – Angle
                  delta(1) = Angle
    Fin Si
  Fin Si
(4) Retour à l'étape 2.

L'argument de la fonction de conversion arrondit les valeurs delta (sur n+2 bits) à n bits, de façon à fournir le symbole sur n bits recherché. Pour une modulation QPSK avec codage différentiel, la fonction Conversion est définie par la table de correspondances suivante:

Tableau 1

| x | Angle | Conversion(x) |
|---|---|---|
| 00 | 0° | 00 |
| 01 | 90° | 01 |
| 10 | 180° | 11 |
| 11 | -90° | 10 |

On notera que selon le présent exemple de réalisation, un symbole n'est décodé que lorsqu'il a été échantillonné avec la phase optimale (Test 'B=Phase' dans les étapes 2 et 3).

3.2] Décodage des symboles dans le cas où la porteuse n'a pas été récupérée (décodage différentiel)

3.2.1] Cas où $\dfrac{\Delta f}{fréquence\_symbole} < \dfrac{\pi}{2^{n+1}}$ est vérifiée

La différence de fréquence est alors assez faible pour que le décodage symbole puisse se faire selon l'algorithme 'B' présenté au point 3.1.

3.2.2] Cas où $\dfrac{\Delta f}{fréquence\_\ symbole} < \dfrac{\pi}{2^{n+1}}$ n'est pas vérifiée

Un test relatif au registre 'Inversion' est rajouté dans la fonction de conversion. Si Inversion=0, l'algorithme 'B' ne change pas. Si par contre Inversion=1, alors on prendra en compte le signe de l'angle pour arrondir l'argument de la fonction de conversion.

L'algorithme 'B' devient alors (modifications soulignées):

(1) Initialisation de delta(0) et delta(1) à zéro.

(2) Si B = Phase, alors

Si Inversion = 0 alors

Si A est pair alors

symbole_émis =

conversion [delta(0)[n-1,...,0]+delta(0)[-1]]

Sinon

symbole_émis =

conversion [delta(1)[n-1,...,0]+delta(1)[-1]]

Fin Si

Sinon

Si A est pair alors

symbole_émis =

conversion [delta(0)[n-1,...,0]+ $\overline{delta(0)[-1]}$ ]

Sinon

symbole_émis =

conversion [delta(1)[n-1,...,0]+ $\overline{delta(1)[-1]}$ ]

Fin Si

Fin Si

Fin Si

(3) Si B = Phase, alors

Si A est pair  alors   delta(0) = Angle

delta(1) = delta (0) − Angle

Sinon  delta(0) = delta (0) − Angle

delta(1) = Angle

Fin Si

Fin Si

(4) Retour à l'étape 2.

Dans l'algorithme ci-dessus, la notation $\overline{X}$ signifie inversion du bit de poids fort (et uniquement celui là) de X.

Il est par ailleurs possible d'évaluer la rotation de la constellation. Ceci revient à calculer la différence de fréquence $\Delta f$ à compenser au niveau du tuner de réception.

Si Inversion = 1, alors

$$\Delta f = fréquence\_symbole \times \frac{\Pi}{2^{N+n\text{-}1}} \times [(\text{-}1)^x \times 2^{N\text{-}1} +$$

$$Moyenne'\,(Phase)\,[N + p - 3,..., p - 1]] \tag{10}$$

où x=Moyenne'(Phase)[N+p-3], ce qui correspond au bit de poids le plus fort de Moyenne'[Phase], c'est à dire le bit de signe.

Si inversion = 0, alors

$$\Delta f = fréquence\_symbole \times \frac{\Pi}{2^{N+n\text{-}1}} \times [Moyenne(Phase)[N + p - 3,..., p - 1]] \tag{11}$$

La fréquence générée par le tuner devra être corrigée de -$\Delta$f.
Le calcul de $\Delta$f doit être effectué lorsque A=0. A défaut, le résultat sera faux.

4] Variante du procédé de la section 2.2.2.

La différence d'angles I(B) est un nombre binaire compris dans l'intervalle [-$2^{N\text{-}1}$,...,+$2^{N\text{-}1}$-1]. Les différentes valeurs d'I(B) peuvent être concentrées soit (cas 1 - figure 7) au niveau du milieu de cet intervalle, autour de la valeur 0 (correspondant à 0 degrés) , soit (cas 2 - figure 8) aux deux extrémités (ce qui correspond à +180 degrés ou -180 degrés), suivant la position de la constellation. Quand on se trouve dans le second cas, les calculs de moyenne sont faussés, car on ne tient pas compte du fait que les deux extrémités de l'intervalle représentent en fait la même valeur (+180°=-180°). Lorsque l'on se situe dans ce cas, on procède à un changement de repère consistant à ramener les valeurs d'I(B) en milieu de repère, par ajout de $\Pi$ modulo 2$\Pi$ aux valeurs d'I(B) ce qui revient à inverser le bit de signe de I(B).
Il faut dans un premier temps déterminer si l'on se trouve dans le cas 1 ou le cas 2. Pour cela, on comptabilise le nombre de valeurs d'I(B) se trouvant aux extrémités de l'intervalle. Ceci est réalisé en comptant le nombre de valeurs d'I(B) dont les deux bits de poids fort (I(B)[N-1] et I(B)[N-2]) sont 10 ou 01. Dans ce but, on effectue un OU exclusif ('xor') entre ces deux bits pour chaque valeur d'I(B).
On considère que l'on se trouve dans le cas 2 si le nombre de valeurs d'I(B) aux extrémités est supérieur à L/2.
L'algorithme nécessite:

- un registre 'Intermédiaire' de même type que 'Optimum',
- m registres 'Accu(i)' de 2(N-1)+p-2 bits, i variant de 0 à m-1,
- m registres 'opos(i)' de N-1+p-2 bits, i variant de 0 à m-1,
- m registres 'σneg(i)' de N-1 +p-2 bits, i variant de 0 à m-1,
- un compteur 'nbxor' de $\log_2$ (L+1) bits,
- un compteur 'nbneg' de $\log_2$ (L+1) bits.

On vérifie pour chaque différence d'angle (A impair) si elle est négative ou positive. Pour chaque classe i, le nombre de différences d'angles négatives est comptabilisé dans nbneg. Les valeurs absolues des différences sont accumulées dans σpos(i) ou σneg(i), selon le signe de chaque différence. nbxor indique le nombre de différences d'angles situés aux extrémités de l'intervalle.
L'algorithme dérivé de l'algorithme 'A' de la section 2.1 est le suivant:

**13**

(1) Initialisation de A, B et Accu (0 à m-1) à zéro

    Initialisation de σpos(0 à m-1), σneg(0 à m-1), nbxor, nbneg à zéro

(2) Si A pair (i.e. bit de poids faible égal à zéro)

alors    I(B) = Angle

Sinon    I(B) = (I(B)-Angle) modulo $2^n$

        Si A=1 alors    $Accu(B) = [I(B)[N-2,...,0]]^2$

                          $nbxor=I(B)[N-1] \text{ xor } I(B)[N-2]$

        Sinon            $Accu(B) = Accu(B) + [I(B)[N-2,...,0]]^2$

                          $nbxor = nbxor + I(B)[N-1] \text{ xor } I(B)[N-2]$

        Fin Si

Fin Si

$Si\ I(B)[N-1] = 1$ alors

Si A=1 alors    nbneg(B)=1

$\sigma$neg(B)=I(B)[N-2,...,0]

$\sigma$pos(B)=0

Sinon    nbneg(B)=nbneg(B)+1

$\sigma$neg(B)=$\sigma$neg(B)+I(B)[N-2,...,0]

Fin Si

Sinon

Si A=1 alors    nbneg(B)=0

$\sigma$neg(B)=0

$\sigma$pos(B)= I(B)[N-2,...,0]

Sinon

$\sigma$pos(B)=$\sigma$pos(B)+I(B)[N-2,...,0]

Fin Si

Fin Si

(3) Si B = m-1  alors  B = 0

Si A = L-1    alors A = 0

sinon A = A+1

Fin Si

Sinon B = B+1

Fin Si

(4) Si nbxor[p,p-1] $\neq$ "00" alors

Intermédiaire = Accu(B) + $2^N$ * $\sigma$neg(B)+ $2^{2N-2}$ * nbneg(B) - [$\sigma$pos(B) + $\sigma$neg(B) - $2^{N-1}$ * nbneg(B)]² * $2^{p-1}$

Inversion = 0

Sinon

Intermédiaire = Accu(B) + $2^N$ * $\sigma$pos(B)+ $2^{2N-2}$ * (L - nbneg(B)) - [$\sigma$pos(B) + $\sigma$neg(B) - $2^{N-1}$ * (L - nbneg(B)]² * $2^{p-1}$

Inversion = 1

Fin Si

Si A = 0 et [B = 0 ou si Optimum > Intermédiaire ] alors

Optimum = Intermédiaire

Phase = B

Fin Si

(5) Reprendre l'étape 2 avec l'angle suivant.

Prendre en considération les N-1 bits les plus faibles de I(B) (c'est-à-dire I(B)[N-2,...,0]) revient à considérer I(B) non signé.

La variante ci-dessus nécessite moins de calculs, mais plus de registres que la version de la section 2.2.2..

Seconde Partie

1] Généralités

Il s'agit de détecter un mot de synchronisation (préambule de salve) de longueur W, et connu par avance. Ce préambule est suivi d'un message, les deux étant codés différentiellement selon le présent exemple (mais ce n'est pas obligatoire). A priori, on considère que la phase peut varier d'une salve à la suivante.

2] Modification du procédé de détermination de la phase d'échantillonnage

Les différents procédés explicités dans la première partie permettent de déterminer la meilleure phase d'échantillonnage en prenant en compte L symboles consécutifs. Si le signal comporte des salves distinctes, il faut que les L symboles soient situés entièrement dans une salve pour que la phase d'échantillonnage soit correctement déterminée pour cette salve.

Pour cela, on souhaite disposer d'une évaluation de la meilleure phase pour chaque symbole (chaque symbole étant ainsi considéré comme étant le dernier d'une suite de L symboles) et non seulement tous les L symboles comme dans la première partie. On modifie par conséquent le procédé de détermination de la phase d'échantillonnage précédemment exposé en mettant en place des pipelines de stockage de manière appropriée.

A chaque instant, on disposera ainsi d'une évaluation du rapport signal sur bruit de la phase courante, c'est à dire celle qui considère le dernier angle reçu comme le L ième symbole accumulé si A est impair, et comme le L+1 ième symbole si A est pair.

Le procédé de détermination de la phase de la section 2.2.2. est modifié de la façon ci-dessous.

On prévoit un pipeline de stockage des valeurs successives de I(B).

Le pipeline comporte ½L*m cellules de largeur n et a la structure d'une ligne à retard de type premier entré premier sorti. La multiplication par m est nécessaire pour stocker les I(B) pour chacune des M classes. Le pipeline permet de disposer de U2 valeurs de I(B) dans le passé. On définit J(B) comme étant I(B) retardé de U2 symboles soit de m*L/2 coups. J(B) est disponible à la sortie du pipeline quand la valeur correspondante de I(B) est présentée en entrée. La figure 4 est un schéma du pipeline, qui est chargé pour chaque différence d'angle (c'est à dire quand A est impair et que I(B) contient la différence d'angle et Accu(B) la différence d'angle au carré).

Le procédé devient alors (les modifications ne sont pas soulignées):

(1)    Initialisation de A, B et Accu (0 à m-1) à zéro

Initialisation de Moyenne (0 à m-1) à zéro

Initialisation de Accu' (0 à m-1) à zéro

Initialisation de Moyenne' (0 à m-1) à zéro

Initialisation à zéro du pipeline de I(B)

(2)    Si A pair (i.e. bit de poids faible à zéro) alors

        I(B) = Angle

sinon    I(B) = (I(B)-Angle) modulo $2^n$

        Lire J(B) dans pipeline

        Accu (B) = Accu (B) + $[I(B)]^2$ - $[J(B)]^2$

        Accu' (B) = Accu' (B) + $[\overline{I(B)}]^2$ - $[\overline{J(B)}]^2$

        Moyenne(B) = Moyenne(B) + I(B) - J(B)

        Moyenne'(B) = Moyenne'(B) + $\overline{I(B)}$ - $\overline{J(B)}$

        Stocker I(B) dans pipeline

    Fin Si

(3)    Si B = m-1      alors  B = 0

                    Si A = L-1    alors A = 0

                              sinon A = A+1

                    Fin Si

                Sinon B = B+1

    Fin Si

(4) Si A = 0 et

```
[ B = 0
ou
Optimum > Accu(B)-2^{p-1} [Moyenne(B)[N+p-3,...,p-1]]² ] alors
        Optimum = Accu(B)-2^{p-1} [Moyenne(B)[N+p-3,...,p-1]]²
        Phase = B
        Inversion = 0
Fin Si
(4') Si A = 0 et Optimum > Accu'(B)-2^{p-1} [Moyenne'(B)[N+p-3,...,p-1]]²
    alors
        Optimum = Accu'(B)-2^{p-1} [Moyenne'(B)[N+p-3,...,p-1]]²
        Phase = B
        Inversion = 1
    Fin Si


(5) Reprendre l'étape 2 avec l'angle suivant.
```

Dans la seconde étape, les calculs sont effectués de telle manière à ce que Accu, Accu', Moyenne et Moyenne' contiennent toujours les valeurs à jour pour les L derniers symboles. Ceci est réalisé en retranchant de manière appropriée J(B), en parallèle à l'addition de I(B), à Moyenne(B) et Moyenne'(B), et en retranchant $J(B)^2$, en parallèle à l'addition de $I(B)^2$, à Accu(B) et Accu'(B).

On obtient ainsi une évaluation de la meilleure phase et du rapport signal à bruit.

<u>3] Identification du préambule</u>

Il reste cependant à identifier le préambule. Deux cas peuvent se présenter :

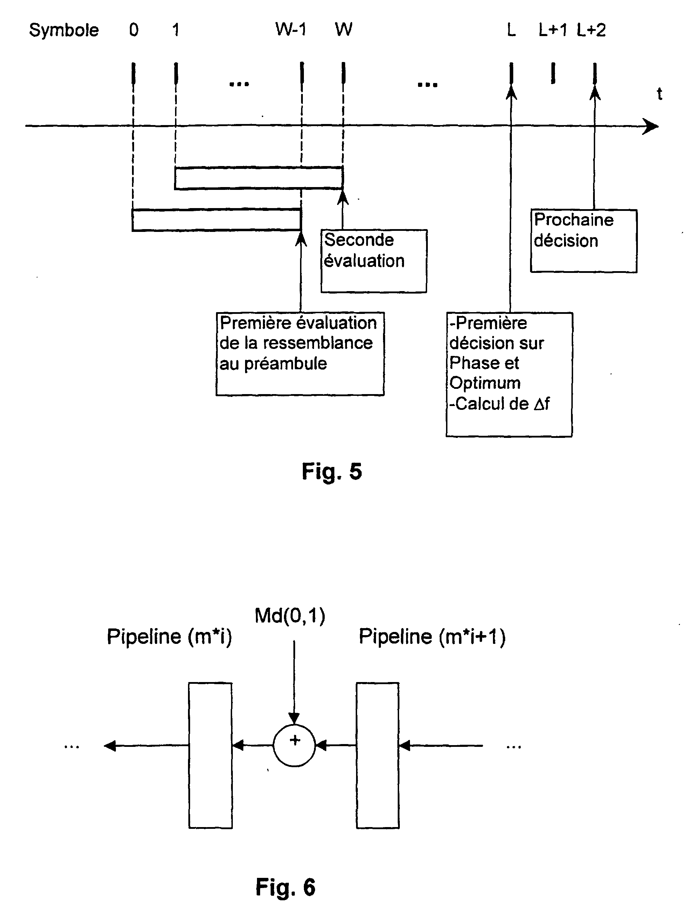

- Cas (a) : On calcule en permanence la ressemblance avec le préambule recherché. Et on ne conserve qu'une valeur par symbole : celle de la « bonne phase » . C'est le cas illustré par la figure 5.
- Cas (b) : On attend de connaître la bonne phase d'après le procédé décrit dans la première partie, puis on applique la reconnaissance du préambule. Cela nécessite d'avoir stocker les n bit de poids forts des angles ayant permis l'évaluation de la bonne phase en utilisant leur N poids faibles.

Le procédé utilisé requiert (en plus de ce qui est nécessaire pour la détermination de la bonne phase) :

- Un pipeline de largeur n et de longueur m*(L+1 ),
- Deux registres delta(0) et delta(1 ), de longueur n+2 (différents des registres delta utilisés dans les algorithmes de la première partie) ,
- Le registre 'Inversion' de 1 bit qui vient de la détermination de la « bonne phase »,
- Un registre 'symbole' de n+2 bits.

```
(1) Initialisation de delta(0) et delta(1) à zéro
Initialisation à zéro du pipeline et de son pointeur de position.
(2) Attente de la valeur d'angle sur N+n bits.
        Symbole = n+2 bits de poids fort de l'angle.
(3) Si A est pair alors
delta(0) = symbole
delta(1 )=delta(1)-symbole
Sinon delta(1) = symbole
```

delta(0)=delta(0)-symbole
(4) Si A est pair alors on alimente le pipeline avec
delta(1)[n-1,...,0]+delta(1)[-1] xor Inversion
Sinon on alimente le pipeline avec
delta(0)[n-1 ,....0]+delta(0)[-1] xor Inversion

(5a) On calcule Ecart pour chaque valeur de B.

Chaque valeur d'Ecart est stockée, en attendant la détermination de la phase optimale.

$$Ecart(B) = \sum_{i=0}^{W-2}[Pipeline(i \times m + B) - C(i)]^2 \bmod 2^n$$

où C(i) est la différence d'angle attendue (voir ci-après).

(5b) On calcule Ecart uniquement pour la phase optimale ('B=Phase').

$$Ecart = \sum_{i=0}^{W-2}[Pipeline(i \times m + Phase) - C(i)]^2 \bmod 2^n$$

Remarque: on choisira soit la solution (5a), soit la solution (5b).
La solution (5a) exige moins de mémoire, mais plus de traitement que la solution (5b): il s'agit de stocker la valeur Ecart pour chaque classe (i.e. chaque phase possible) et ce en continu pour chaque symbole jusqu'à détermination de la phase optimale. La figure 5 montre que cette phase optimale peut être obtenue jusqu'à L-W symboles plus tard. Cette solution évite de stocker toutes les différences d'angles sur n bits pendant l'ensemble des m*(L+1) phases, et on peut réduire la taille de la mémoire pipeline.
La solution (5b) exige plus de mémoire, dans le sens où il est nécessaire de stocker les différences sur n bits pour toutes les m*(L+1) phases, le calcul d'Ecart n'étant cependant effectué qu'une fois que la phase optimale a été choisie, sur la base de la seule série de différences d'angles correspondant à cette phase, ce qui réduit le nombre de calculs à effectuer par un facteur m.
Le préambule sera supposé détecté lorsque Ecart sera nul (ou inférieur à un seuil donné) pour la phase optimale.
Les étapes 2 à 4 servent à remplir le pipeline avec les différences d'angles successives. La fonction Conversion utilisée aux sections 3.1. et 3.2. n'est pas nécessaire ici: on ne cherche pas à déterminer les symboles car on va directement comparer les différences d'angles stockées à celles correspondant au préambule attendu.
Les calculs de comparaison, par détermination de l'écart tel que défini dans les étapes (5a) et (5b), sont effectués sur la base des valeurs stockées dans le pipeline.
Un exemple de l'application de cet algorithme peut être donné avec le préambule CCCCCC0D (Hexadécimal), qui est le préambule utilisé dans certaines applications telles que le DVB-RC (Canal Retour) ou encore DAVIC 1.1 ('Digital Audio Video Council'). En QPSK, la longueur de ce préambule est de W=16 symboles de deux bits (soit n=1 ).
Le tableau 2 indique dans sa première ligne (Δ) le codage angulaire différentiel du préambule. La seconde ligne comporte le pointeur i du pipeline contenant les différences d'angle. La troisième ligne C(i) indique la différence d'angle attendue dans le pipeline si ce dernier contient le préambule. La dernière ligne (Md: Modification) indique la différence attendue entre le (i+1)ème symbole du préambule et le ième.

| Δ | П | П | П | П | П | П | П | П | П | П | П | 0 | 0 | П | -П/2 |
|---|---|---|---|---|---|---|---|---|---|---|---|---|---|---|---|
| i | 0 | 1 | 2 | 3 | 4 | 5 | 6 | 7 | 8 | 9 | 10 | 11 | 12 | 13 | 14 |
| C(i) | 10 | 10 | 10 | 10 | 10 | 10 | 10 | 10 | 10 | 10 | 10 | 00 | 00 | 10 | 11 |
| Md | 00 | 00 | 00 | 00 | 00 | 00 | 00 | 00 | 00 | 00 | 10 | 00 | 10 | 11 | 11 |

Tableau 2

Selon une variante de réalisation, le calcul de la différence dans la détermination d'Ecart peut être introduit au niveau du pipeline, en ajoutant un additionneur à deux entrées entre deux registres consécutifs correspondant à une même classe, l'additionneur recevant par ailleurs la valeur appropriée de Md. Dans ce cas, la détermination d'Ecart se résume de la façon suivante:

$$Ecart = \sum_{i=0}^{W-2}[Pipeline(m*i + Phase)]^2$$

La figure 6 illustre ce cas.

**Revendications**

1.  Procédé de détermination de la phase d'échantillonnage d'un signal modulé par modulation numérique **caractérisé en ce qu'**il comprend les étapes:

   de suréchantillonnage de facteur m des coordonnées de L symboles consécutifs,
   de conversion des coordonnées suréchantillonnées des L symboles en valeurs angulaires,
   de repli des valeurs angulaires sur un point de la constellation de la modulation,
   d'estimation du bruit des valeurs angulaires, pour chaque phase de suréchantillonnage, par rapport au dit point,
   de sélection de la phase de suréchantillonnage présentant le bruit le plus faible.

2.  Procédé selon la revendication 1, **caractérisé en ce que** le bruit est estimé par calcul de la variance des valeurs angulaires repliées par rapport à la valeur angulaire théorique dudit point.

3.  Procédé selon la revendication 2, **caractérisé en ce que** les symboles sont codés en différentiel et **en ce que** l'étape de calcul de la variance est effectuée sur la base de différences d'angles.

4.  Procédé selon l'une des revendications 1 à 3, **caractérisé en ce que** le choix de la phase de suréchantillonnage optimale est réalisé tous les L symboles.

5.  Procédé selon la revendication 2, **caractérisé en ce qu'**il comporte en outre l'étape de mémorisation des valeurs de différence d'angle pour la détermination de valeurs de variance sur L symboles pour chaque valeur de différence d'angle ('variance glissante').

6.  Procédé de détection d'un mot de synchronisation comportant les étapes selon la revendication 5, **caractérisé en ce qu'**il comporte en outre l'étape de détermination de l'écart d'une suite de différences d'angles par rapport à des différences d'angles correspondant au mot de synchronisation prédéterminé, un écart sensiblement nul indiquant la présence dudit mot.

7.  Procédé selon la revendication 6, **caractérisé en ce qu'**il comporte en outre les étapes:

   de mémorisation de l'ensemble des valeurs de différence d'angles suréchantillonnés, jusqu'à détermination de la phase d'échantillonnage optimale;
   de détermination de ladite phase optimale;

de détermination de l'écart uniquement pour les valeurs de différence d'angles correspondant à ladite phase.

8. Procédé selon la revendication 6, **caractérisé en ce qu'**il comporte en outre les étapes:

d'accumulation, en continu au fur et à mesure de l'arrivée des valeurs de différence d'angle, de l'écart partiel pour chaque phase d'échantillonnage distincte;
de détermination de la phase optimale;
d'analyse des écarts accumulés pour la phase optimale en vue de la détection du mot de synchronisation.

**Patentansprüche**

1. Verfahren zur Ermittlung der Abtastphase eines durch eine digitale Modulation modulierten Signals, **gekennzeichnet durch** die folgenden Schritte:

Überabtastung der Koordinaten von L aufeinander folgenden Symbolen um den Faktor m,
Umsetzung der überabgetasteten Koordinaten der L Symbole in Winkelwerte,
Faltung der Winkelwerte auf einen Punkt der Konstellation der Modulation,
Schätzung des Rauschens der Winkelwerte für jede Phase der Überabtastung relativ zu dem genannten Punkt,
Auswahl der Überabtastphase mit dem niedrigsten Rauschen.

2. Verfahren nach Anspruch 1, **dadurch gekennzeichnet, dass** das Rauschen geschätzt wird durch eine Berechnung der Varianz der Winkelwerte, gefaltet über Winkelwerte, relativ zu dem theoretischen Winkelwert des genannten Punktes.

3. Verfahren nach Anspruch 2, **dadurch gekennzeichnet, dass** die Symbole differentiell codiert sind und dass der Schritt der Berechnung der Varianz auf der Grundlage der Winkeldifferenzen erfolgt.

4. Verfahren nach einem der Ansprüche 1 bis 3, **dadurch gekennzeichnet, dass** die Wahl der optimalen Überabtastphase durch alle L Symbole erfolgt.

5. Verfahren nach Anspruch 2, **gekennzeichnet durch** einen Schritt zur Speicherung der Winkeldifferenzwerte für die Ermittlung der Varianzwerte über L Symbole für jeden Winkeldifferenzwert ("gleitende Varianz").

6. Verfahren zur Detektierung eines Synchronworts mit den Schritten nach Anspruch 5, **gekennzeichnet durch** den Schritt Ermittlung der Abweichung einer Folge von Winkeldifferenzen entsprechend dem vorbestimmten Synchronwort eine Abweichung von etwa null zur Anzeige der Anwesenheit dieses Wortes.

7. Verfahren nach Anspruch 6, **gekennzeichnet durch** folgende Schritte:

Speicherung des Satzes von Differenzwerten von überabgetasteten Winkeln, bis die optimale Abtastphase ermittelt ist,
Ermittlung der genannten optimalen Phase,
Ermittlung der Abweichung nur für die der genannten Phase entsprechenden Winkeldifferenzwerte.

8. Verfahren nach Anspruch 6, **gekennzeichnet durch** die folgenden Schritte:

kontinuierliche Akkumulation und, wenn die Winkeldifferenzwerte ankommen, der teilweisen Ableitung für jede getrennte Abtastphase,
Ermittlung der optimalen Phase,
Analyse der akkumulierten Abweichungen für die optimale Phase im Hinblick auf die Detektion des Synchronworts.

**Claims**

1. Method for determining the sampling phase of a signal modulated by digital modulation, **characterized in that** it comprises the steps:

of oversampling by factor m the coordinates of L consecutive symbols,
of converting the oversampled coordinates of the L symbols into angular values,
of folding the angular values over onto a point of the constellation of the modulation,
of estimating the noise in the angular values, for each oversampling phase, with respect to the said point,
of selecting the oversampling phase exhibiting the lowest noise.

2. Method according to Claim 1, **characterized in that** the noise is estimated by calculating the variance of the folded-over angular values with respect to the theoretical angular value of the said point.

3. Method according to Claim 2, **characterized in that** the symbols are differentially coded and **in that** the step of calculating the variance is performed on the basis of differences of angles.

4. Method according to one of Claims 1 to 3, **characterized in that** the choice of the optimal oversampling phase is carried out every L symbols.

5. Method according to Claim 2, **characterized in that** it furthermore comprises the step of storing the angle difference values for determining values of variance over L symbols for each value of angle difference ("sliding variance").

6. Method for detecting a synchronization word comprising the steps according to Claim 5, **characterized in that** it furthermore comprises the step of determining the deviation of a string of angle differences with respect to angle differences corresponding to the predetermined synchronization word, a substantially zero deviation indicating the presence of the said word.

7. Method according to Claim 6, **characterized in that** it furthermore comprises the steps:

of storing the set of difference values of oversampled angles, until the optimal sampling phase is determined;
of determining the said optimal phase;
of determining the deviation solely for the angle difference values corresponding to the said phase.

8. Method according to Claim 6, **characterized in that** it furthermore comprises the steps:

of accumulating, continuously as and when the angle difference values arrive, the partial deviation for each distinct sampling phase;
of determining the optimal phase;
of analysing the accumulated deviations for the optimal phase with a view to detecting the synchronization word.

Secteur 01

Q

θ

Secteur 00

I

Secteur 11

Secteur 10

**Fig. 1**

141

142 → 143 → 145

144

146

149

147

140

148 →

**Fig. 2**

**Fig. 3**

Symbole 16 | Symbole 15 | Symbole 1 | Symbole 0

I(B)

(vers processeur)

Classes du
suréchantillonnage

J(B)

(vers processeur)

**Fig. 4**

Symbole 0 1 W-1 W L L+1 L+2

... ... t

Seconde
évaluation

Prochaine
décision

Première évaluation
de la ressemblance
au préambule

-Première
décision sur
Phase et
Optimum
-Calcul de Δf

**Fig. 5**

Md(0,1)

Pipeline (m*i) Pipeline (m*i+1)

... + ...

**Fig. 6**

**Fig. 7**

Le fait d'être sur N bits induit ce repliement

**Fig. 8**